# EUROPÄISCHE PATENTSCHRIFT

(11) **EP 4 288 805 B1**
(45) Veröffentlichungstag und Bekanntmachung des Hinweises auf die Patenterteilung: **10.12.2025**
(21) Anmeldenummer: 22706258.5
(22) Anmeldetag: 01.02.2022
(51) Int. Cl.: G01S 17/42, G01S 7/481, G01S 17/34, G01S 17/931

(54) **EMPFANGSEINRICHTUNG EINER DETEKTIONSVORRICHTUNG ZUR ÜBERWACHUNG WENIGSTENS EINES ÜBERWACHUNGSBEREICHS AUF OBJEKTE HIN, DETEKTIONSVORRICHTUNG, FAHRZEUG MIT WENIGSTENS EINER DETEKTIONSVORRICHTUNG UND VERFAHREN ZUM BETREIBEN EINER DETEKTIONSVORRICHTUNG**
RECEIVING DEVICE OF A DETECTION DEVICE FOR MONITORING AT LEAST ONE MONITORING REGION FOR OBJECTS, DETECTION DEVICE, VEHICLE COMPRISING AT LEAST ONE DETECTION DEVICE, AND METHOD FOR OPERATING A DETECTION DEVICE
DISPOSITIF DE RÉCEPTION D'UN DISPOSITIF DE DÉTECTION POUR SURVEILLER AU MOINS UNE RÉGION DE SURVEILLANCE D'OBJETS, DISPOSITIF DE DÉTECTION, VÉHICULE COMPRENANT AU MOINS UN DISPOSITIF DE DÉTECTION ET PROCÉDÉ DE FONCTIONNEMENT D'UN DISPOSITIF DE DÉTECTION

(30) Priorität: 02.02.2021 DE 102021102292
(43) Veröffentlichungstag der Anmeldung: 13.12.2023
(73) Patentinhaber: Valeo Schalter und Sensoren GmbH, 74321 Bietigheim-Bissingen (DE)
(72) Erfinder: PARL, Christoph, 74321 Bietigheim-Bissingen (DE); SCHULER, Thomas, 74321 Bietigheim-Bissingen (DE); ZHENG, Wensi, 74321 Bietigheim-Bissingen (DE)
(74) Vertreter: Pothmann, Karsten
(86) Internationale Anmeldenummer: PCT/EP2022/052254
(87) Internationale Veröffentlichungsnummer: WO 2022/167383

(56) Entgegenhaltungen:
- US-A- 5 737 075
- US-A1- 2020 096 613
- US-A1- 2020 408 912

## Beschreibung

### Technisches Gebiet

Die Erfindung betrifft eine Empfangseinrichtung einer Detektionsvorrichtung zur Überwachung wenigstens eines Überwachungsbereichs auf Objekte hin mittels elektromagnetischer Abtastsignale gemäß Anspruch 1.

Ferner betrifft die Erfindung eine Detektionsvorrichtung zur Überwachung wenigstens eines Überwachungsbereichs auf Objekte hin mittels elektromagnetischer Abtastsignale gemäß Anspruch 11.

Außerdem betrifft die Erfindung ein Fahrzeug mit wenigstens einer Detektionsvorrichtung zur Überwachung wenigstens eines Überwachungsbereichs auf Objekte hin mittels elektromagnetischer Abtastsignale gemäß Anspruch 12.

Des Weiteren betrifft die Erfindung ein Verfahren zum Betreiben einer Detektionsvorrichtung zur Überwachung wenigstens eines Überwachungsbereichs auf Objekte hin gemäß Anspruch 13.

### Stand der Technik

Aus der US 2019/0370614 A1 ist ein hochauflösendes LiDAR-System bekannt. Eine Laserquelle sendet eine Trägerwelle aus, die im Modulator amplituden- oder frequenz- oder phasenmoduliert oder in einer Kombination moduliert wird, um einen Puls zu erzeugen, der eine Bandbreite und eine Dauer hat. Ein Splitter teilt den Chirp in einen Sendestrahl mit dem größten Teil der Energie des Strahls und einen Referenzstrahl mit einer viel geringeren Energiemenge, die jedoch ausreicht, um eine gute Heterodyn- oder Homodyninterferenz mit dem von einem Ziel gestreuten Rücklicht zu erzeugen. Mehrere Teile des Ziels streuen für jeden abgetasteten Strahl ein jeweiliges zurückgeworfenes Lichtsignal zurück zur Detektoranordnung, was zu einer Punktwolke führt, die auf den mehrfachen Entfernungen der jeweiligen mehrfachen Teile des Ziels basiert, die durch mehrere Strahlen und mehrfache Rückläufe beleuchtet werden. Ein Entchirp-Mischer vergleicht ein detektiertes Signal mit der ursprünglichen Chirp-Wellenform, die vom Leistungsteiler und Operationsverstärker ausgegeben wird, um ein elektrisches Signal mit der Schwebungsfrequenz zu erzeugen, die von der Frequenzdifferenz zwischen der HF-Referenzwellenform und der detektierten Wellenform abhängt. Ein weiterer Operationsverstärker und ein FFT-Prozess werden verwendet, um die Schwebungsfrequenz zu ermitteln.

Des Weiteren ist aus der US 2020/0408912 A1 ein Lidar-System mit einer Lichtquelle bekannt, die ein Lidarsignal mit mehreren verschiedenen Kanälen aussendet. Dabei ist das Lidar-System dazu augebildet eine Vielzahl von zusammengesetzten Signalen zu erzeugen, die jeweils einem anderen Kanal zugeordnet sind und ein Signalpaar aus einem Referenzsignal des ausgesendeten Lichtes und ein Vergleichssignal aus dem an einem Objekt reflektierten Licht umfassen. Zur Messung einer Frequenzverschiebung zwischen Referenz- und Vergleichssignal wird eine elektronische Schaltung verwendet, die eine Frequenzverschiebung induziert, wobei die Frequenzverschiebung der Signalpaare unterschiedlich ist.

Aus der US 5,737,075 A ist ein elektronisches Abbildungssystem bekannt. Das System verwendet einen räumlichen Lichtmodulator in der der Brennebene einer Sammeloptik. Dabei wird jedes Pixel des Modulators wird durch eine spezifische Modulationsfunktion angesteuert, um die Durchstrahlung an jedem Pixel so eindeutig zu kodieren. Ein Modulationsdetektor summiert das Signal aller Pixel. Im Anschluss an die Detektion ergeben sich durch die entsprechende Transformation des Summensignals spezifische Pixel Durchsatz-Strahlungsintensitätsniveaus.

Aus der US 2020/0096613 A1 ist ein Lidar-System bekannt, um Licht im sichtbaren, nahen Infrarot und kurzwelligem Infrarot Spektrum zu senden und zu empfangen. Das Lidar-System umfasst einen Superkontinuums-Laser und eine Empfangsoptik mit einem Wellenlängen-Splitter, um die empfangenen Echosignale in den sichtbaren, kurwelligen und nahen Infrarotbereich aufzusplitten und jeweils auf zugehörige Fotosensoren zu verteilen.

Der Erfindung liegt die Aufgabe zugrunde, eine Empfangseinrichtung, eine Detektionsvorrichtung, ein Fahrzeug und ein Verfahren der eingangs genannten Art zu gestalten, welche mit einem geringeren Aufwand realisiert und/oder betrieben werden können.

### Offenbarung der Erfindung

Diese Aufgabe wird erfindungsgemäß bei der Empfangseinrichtung dadurch gelöst, dass wenigstens ein Frequenzanalysemittel wenigstens ein Spektralanalysemittel aufweist, mit dem elektromagnetische Signale zu wenigstens einem elektromagnetischen Spektrum analysiert werden können, welches in wenigstens einem Spektrumausgabebereich des wenigstens einen Spektralanalysemittels ausgegeben werden kann, wenigstens zwei Signal-Umwandlungsmittel, mit denen getrennte elektrische Signale ermittelt werden können, unterschiedlichen Abschnitten wenigstens eines Spektrumausgabebereichs des wenigstens eine Spektralanalysemittels zugeordnet sind, wobei die unterschiedlichen Abschnitte wenigstens eines Spektrumausgabebereichs des wenigstens einen Spektralanalysemittels unterschiedlichen Frequenzbereichen wenigstens eines elektromagnetischen Spektrums entsprechen.

Erfindungsgemäß weist das wenigstens eine Frequenzanalysemittel wenigstens ein Spektralanalysemittel auf, mit dem elektromagnetische Signale zu wenigstens einem elektromagnetischen Spektrum, insbesondere einem Frequenzspektrum, analysiert werden können. Auf diese Weise kann die Spektralanalyse direkt auf der elektromagnetischen Ebene, insbesondere der optischen Ebene, vorgenommen werden.

Erfindungsgemäß kann auf optischem Wege eine Transformation der elektromagnetischen Signale, insbesondere Echosignale und/oder Abtastsignale, in ein Frequenzspektrum erreicht werden. Im Unterschied zu einer Fourier-Transformation auf elektrischem Wege kann die erfindungsgemäß optische Transformation mit geringeren Verlusten realisiert werden. Ferner kann ein Aufwand an elektrischen Bauteilen, welche bei dem aus dem Stand der Technik bekannten LiDAR-System die Umwandlung in das Frequenzspektrum übernehmen, verringert werden.

Vorteilhafterweise können mit dem wenigstens einen Frequenzanalysemittel elektromagnetische Echosignale und/oder elektromagnetische Abtastsignale zu wenigstens einem elektromagnetischen Spektrum analysiert werden. Auf diese Weise können die elektromagnetischen Echosignale und die elektromagnetischen Abtastsignale gemeinsam verarbeitet, insbesondere in Korrelation gebracht, werden.

Das elektromagnetische Spektrum wird in wenigstens einem Spektrumausgabebereich des wenigstens einen Spektralanalysemittels ausgegeben. Dabei entsprechen unterschiedliche Abschnitte des wenigstens einen Spektrumausgabebereichs unterschiedlichen Frequenzbereichen des wenigstens einen elektromagnetischen Spektrums. Wenigstens zwei Signal-Umwandlungsmittel sind unterschiedlichen Abschnitten des wenigstens einen Spektrumausgabebereichs zugeordnet. Die entsprechenden unterschiedlichen Frequenzbereiche des ausgegebenen Spektrums können mit den Signal-Umwandlungsmitteln getrennt erfasst und in entsprechende elektrische Signale umgewandelt werden.

Vorteilhafterweise kann sich der wenigstens eine Spektrumausgabebereich frequenzmäßig über die möglichen Frequenzen der elektromagnetischen Abtastsignale und der elektromagnetischen Echosignale erstrecken. Auf diese Weise deckt der wenigstens eine Spektrumausgabebereich den gesamten Frequenzbereich der elektromagnetischen Abtastsignale und der Echosignale vollständig ab.

Vorteilhafterweise kann die Empfangseinrichtung eine Vielzahl von Signal-Umwandlungsmitteln aufweisen, welche unterschiedlichen Abschnitten entlang des wenigstens einen Spektrumausgabebereichs zugeordnet sind. Auf diese Weise kann eine Auflösung bei der Erfassung des wenigstens einen elektromagnetischen Spektrums vergrößert werden. So kann eine Auflösung bei der Bestimmung der Entfernung von Objekten verbessert werden.

Erfindungsgemäß ist wenigstens ein elektromagnetisches Abtastsignal ein frequenzmoduliertes Dauerstrichsignal (FMCW-Signal) Entsprechend ist auch das reflektierte Echosignal ein FMCW-Signal. Mit einem Signal-Umwandlungsmittel kann zu einem definierten Zeitpunkt ein elektrisches Signal realisiert werden, welches die Signalstärke des entsprechenden Abschnitts des elektromagnetischen Spektrums charakterisiert, dem das Signal-Umwandlungsmittel zugeordnet ist. Liegt in dem Abschnitt des elektromagnetischen Spektrums zu dem definierten Zeitpunkt eine Spektrallinie, so wird mit dem Signal-Umwandlungsmittel ein entsprechendes Signalmaximum generiert. Eine Spektrallinie charakterisiert das Vorliegen einer Frequenz in dem eingeleiteten elektromagnetischen Signal. Die Frequenz wird durch die Position des der Spektrallinie in dem wenigstens einen Spektrumausgabebereich, insbesondere dem Abschnitt des wenigstens einen Spektrumausgabebereichs, in dem die Spektrallinie liegt, charakterisiert.

Vorteilhafterweise kann die Empfangseinrichtung wenigstens teilweise als Ein-Chip-System realisiert werden. Bei Ein-Chip-Systemen können alle oder ein großer Teil der Funktionen des Systems auf einem Chip integriert werden. Derartige Ein-Chip-Systeme können platzsparend und robust realisiert werden. Ein-Chip-Systeme sind auch unter der Bezeichnung "System-on-a-Chip" bekannt.

Mit der erfindungsgemäßen Empfangseinrichtung können mithilfe wenigstens einer Frequenzanalyse Maxima in einem Frequenzspektrum der elektromagnetischen Signale, insbesondere der Abtastsignale und/oder der Echosignale, extrahiert werden.

Auf Basis wenigstens einer Frequenzanalyse können Informationen zu dem wenigstens einen Überwachungsbereich, insbesondere Objektinformationen von Objekten in dem wenigstens einen Überwachungsbereich, ermittelt werden. Bei den Informationen zu dem wenigstens einen Überwachungsbereich kann es sich um Objektinformationen insbesondere in Form von Entfernungen, Geschwindigkeiten und/oder Richtungen von Objekten, an denen die Abtastsignale reflektiert werden, relativ zu wenigstens einem Bezugsbereich insbesondere der Detektionsvorrichtung handeln.

Vorteilhafterweise kann die wenigstens eine Detektionsvorrichtung als Light-Detection-and-Ranging-Systeme (LiDAR), Laser-Detection-and-Ranging-Systeme (LaDAR) oder dergleichen ausgestaltet sein. Mit derartigen Detektionsvorrichtungen können Entfernungen, Geschwindigkeiten und/oder Richtungen von Objekten relativ zu Bezugsbereichen insbesondere der Detektionsvorrichtung ermittelt werden.

Vorteilhafterweise kann die Erfindung bei Fahrzeugen, insbesondere Kraftfahrzeugen, verwendet werden. Vorteilhafterweise kann die Erfindung bei Landfahrzeugen, insbesondere Personenkraftwagen, Lastkraftwagen, Bussen, Motorrädern oder dergleichen, Luftfahrzeugen, insbesondere Drohnen, und/oder Wasserfahrzeugen verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb, in der Robotik und/oder bei Maschinen, insbesondere Bau- oder Transportmaschinen, wie Kränen, Baggern oder dergleichen, eingesetzt werden.

Die Detektionsvorrichtung kann vorteilhafterweise mit wenigstens einer elektronischen Steuervorrichtung eines Fahrzeugs oder einer Maschine, insbesondere einem Fahrerassistenzsystem, verbunden oder Teil einer solchen sein. Auf diese Weise kann wenigstens ein Teil der Funktionen des Fahrzeugs oder der Maschine autonom oder teilautonom betrieben werden.

Mit der Detektionsvorrichtung können stehende oder bewegte Objekte, insbesondere Fahrzeuge, Personen, insbesondere Gesten und/oder Bewegungen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Bei einer vorteilhaften Ausführungsform kann wenigstens ein Spektralanalysemittel wenigstens einen Spektralapparat aufweisen. Mit einem Spektralapparat können elektromagnetische Signale in elektromagnetische Spektren zerlegt werden.

Vorteilhafterweise kann wenigstens ein Spektralanalysemittel wenigstens ein Spektroskop aufweisen. Spektroskopen können mit einfachen Mitteln und/oder platzsparend realisiert werden.

Vorteilhafterweise kann wenigstens ein Spektralanalysemittel als On-Chip-Spektroskop ausgestaltet sein. Auf diese Weise kann das wenigstens eine Spektralanalysemittel platzsparend realisiert werden.

Vorteilhafterweise können wenigstens Teile wenigstens eines Spektralanalysemittels auf einem optischen Halbleiterchip, beispielsweise einem optischen Siliziumchip (SoC), integriert sein. Mit anderen Worten können wenigstens Teile des wenigstens einen Spektralanalysemittels auf einem sogenannten photonic integrated circuit (PIC) integriert sein. Auf diese Weise kann das wenigstens eine Spektralanalysemittel kompakter und robuster realisiert werden.

Bei einer weiteren vorteilhaften Ausführungsform kann wenigstens ein Signalumwandlungsmittel wenigstens ein elektrooptisches Bauteil aufweisen, mit dem elektromagnetische Signale in elektrische Signale umgewandelt werden können. Auf diese Weise können die elektromagnetischen Signale des elektromagnetischen Spektrums in elektrische Signale umgewandelt werden. Die elektrischen Signale können mit entsprechenden elektrischen Bauteilen weiterverarbeitet werden.

Vorteilhafterweise kann wenigstens ein Signal-Umwandlungsmittel mit Sensoren, insbesondere Punktsensoren, Zeilensensoren und/oder Flächensensoren, im Besonderen (Lawinen)fotodioden, Photodiodenzeilen, CCD-Sensoren, Active-Pixel-Sensoren, insbesondere CMOS-Sensoren, oder dergleichen, realisiert werden. Auf diese Weise können die Signal-Umwandlungsmittel flexibel an ihren Verwendungszweck angepasst werden.

Vorteilhafterweise kann wenigstens ein Signal-Umwandlungsmittel für die Frequenzen der elektromagnetischen Signale, insbesondere der Abtastsignale und/oder der Echosignale, ausgelegt sein. Auf diese Weise kann die Effizienz der Signalumwandlung und/oder ein Signal-Rausch-Verhältnis verbessert werden.

Bei einer weiteren vorteilhaften Ausführungsform kann wenigstens ein Frequenzanalysemittel wenigstens ein Aufnahmesteuermittel aufweisen, mit welche ein jeweiliger Aufnahme-Startzeitpunkt und/oder eine jeweilige Aufnahmedauer für wenigstens einen Teil der Signal-Umwandlungsmittel gesteuert werden kann. Auf diese Weise können die mit den Signal-Umwandlungsmittel ermittelten elektrische Signale mit einer Zeitgröße belegt werden. So kann ein Frequenz-Zeit-Verlauf der zu analysierenden elektromagnetischen Signale, insbesondere der Abtastsignale und/oder Echosignale, ermittelt werden.

Bei einer weiteren vorteilhaften Ausführungsform kann die Empfangseinrichtung wenigstens ein Speichermittel aufweisen zur Speicherung wenigstens eines Teils der mit den Signal-Umwandlungsmitteln ermittelten elektrischen Signale. Auf diese Weise können die elektrischen Signale gespeichert werden. So kann die Übermittlung der elektrischen Signale insbesondere an nachfolgende Digitalisierungsmittel verlangsamt werden. Ein Aufwand an Digitalisierungsmitteln zur Digitalisierung der elektrischen Signale kann so verringert werden. Insbesondere kann mithilfe des wenigstens einen elektrischen Speichermittels eine Anzahl von Analog-Digital-Wandler-Kanälen zur Digitalisierung der elektrischen Signale der einzelnen Signal-Umwandlungsmittel verringert werden.

Vorteilhafterweise kann wenigstens ein Speichermittel wenigstens eine Analogspeicherzelle aufweisen oder daraus bestehen. Mit Analogspeicherzellen könne analoge elektrische Signale gespeichert werden.

Vorteilhafterweise können die elektrischen Speichermittel gleichzeitig befüllt und/oder ausgelesen werden. Auf diese Weise können die aus dem elektromagnetischen Spektrum ermittelten elektrische Signale simultan gespeichert und weitergegeben werden. So kann eine Momentaufnahme des elektromagnetischen Spektrums mittels der elektrischen Signale verarbeitet werden.

Bei einer weiteren vorteilhaften Ausführungsform kann die Empfangseinrichtung wenigstens ein Verstärkungsmittel aufweisen zur Verstärkung wenigstens eines Teils der mit den Signal-Umwandlungsmitteln ermittelten elektrischen Signale. Auf diese Weise kann eine Leistungsaufnahme der elektrischen Bauteile der Empfangseinrichtung verringert werden.

Vorteilhafterweise kann wenigstens ein Verstärkungsmittel einen Vorverstärker, insbesondere einen Transimpedanzverstärker (TIA), mit niedriger Bandbreite aufweisen oder daraus bestehen. So kann die Leistungsaufnahme der elektrischen Bauteile weiter verringert werden.

Vorteilhafterweise kann wenigstens ein Verstärkungsmittel optional zwischen einem Signal-Umwandlungsmittel und einem Speichermittel angeordnet sein. Auf diese Weise können die elektrischen Signale verstärkt werden, bevor sie in dem Speichermittel gespeichert werden.

Alternativ oder zusätzlich kann wenigstens ein Verstärkungsmittel funktional zwischen einem Speichermittel und einem Digitalisierungsmittel angeordnet sein. Auf diese Weise kann das in dem Speichermittel gespeicherte elektrische Signal vor der Digitalisierung mit dem Digitalisierungsmittel verstärkt werden. Insgesamt kann so ein Signalrauschverhältnis verbessert werden.

Bei einer weiteren vorteilhaften Ausführungsform kann die Empfangseinrichtung wenigstens ein Digitalisierungsmittel aufweisen zur Digitalisierung wenigstens eines Teils der mit den Signal-Umwandlungsmitteln ermittelten elektrischen Signale. Auf diese Weise können die analogen elektrischen Signale in digitale Signale umgewandelt werden. Die digitalen Signale können mit entsprechenden elektrischen digitalen Bauteilen verarbeitet werden.

Vorteilhafterweise kann wenigstens ein Digitalisierungsmittel wenigstens einen Analog-Digital-Wandler aufweisen. Auf diese Weise kann die Digitalisierung einfach realisiert werden.

Vorteilhafterweise kann wenigstens ein Digitalisierungsmittel funktional hinter wenigstens einem Speichermittel angeordnet sein. Auf diese Weise kann mithilfe des Speichermittels ein Aufwand an Digitalisierungsmitteln, insbesondere die Anzahl von erforderlichen Analog-Digital-Wandlern, verringert werden.

Bei einer weiteren vorteilhaften Ausführungsform kann wenigstens ein Frequenzanalysemittel wenigstens ein Signaleinkopplungsbereich aufweisen zur Einkopplung von elektromagnetischen Signalen. Auf diese Weise kann eine zuverlässige Einkopplung der elektromagnetischen Signale in das Frequenzanalysemittel realisiert werden.

Vorteilhafterweise kann wenigstens ein Signaleinkopplungsbereich so ausgestaltet sein, elektromagnetische Echosignale und elektromagnetische Abtastsignale in gleicher Weise in das wenigstens eine Frequenzanalysemittel eingekoppelt werden können. Auf diese Weise können die elektromagnetischen Echosignale und die elektromagnetischen Abtastsignale zu einem gemeinsamen elektromagnetischen Spektrum analysiert werden. Der Frequenzverlauf der Echosignale und Frequenzverlauf der Abtastsignale kann so direkt miteinander verglichen werden. Aus dem direkten Vergleich der Frequenzverläufe der Echosignale und der Abtastsignale können Entfernungsgrößen einfacher ermittelt werden.

Bei einer weiteren vorteilhaften Ausführungsform kann die Empfangseinrichtung wenigstens ein Empfangsgrößen-Bestimmungsmittel aufweisen zur Ermittlung wenigstens einer Empfangsgröße für wenigstens ein erfasstes Objekt direkt oder indirekt aus elektrischen Signalen, die mit den Signal-Umwandlungsmitteln ermittelt werden können. Auf diese Weise kann über die elektrische Signale, die den Frequenzverlauf wenigstens eines elektromagnetischen Echosignals charakterisieren, wenigstens eine Entfernungsgröße für ein erfasstes Objekt ermittelt werden.

Entfernungsgrößen sind Größen, welche die Entfernung eines Objekts zu einem definierten Bezugspunkt, insbesondere der Detektionsvorrichtung, charakterisieren.

Bei einer Entfernungsbestimmung mithilfe eines direkten Flugzeitverfahrens kann die Flugzeit zwischen Senden und Empfangen der zur Erfassung eines Objekts dienenden elektromagnetischen Signale als Entfernungsgröße dienen.

Bei einer Entfernungsbestimmung mithilfe eines indirekten Flugzeitverfahrens können Phasenunterschiede oder Frequenzunterschiede zwischen einem gesendeten Signal, insbesondere einem elektromagnetischen Signal oder einem das elektromagnetische Signal generierenden elektrischen Signals, und dem empfangenen reflektierten Signal, insbesondere dem reflektierten elektromagnetischen Signal oder einem aus dem reflektierten elektromagnetischen Signal generierten elektrische Signal, als Entfernungsgröße verwendet werden. Als Entfernungsgrößen können auch Phasenunterschiede oder Frequenzunterschiede charakterisierende Größen, insbesondere räumliche Abstände oder diese räumlichen Abstände charakterisierende Abstandsgrößen zwischen Spektrallinien eines Spektrums, insbesondere eines Frequenzspektrums, wenigstens eines Teils der elektromagnetischen Signale, verwendet werden.

Vorteilhafterweise kann wenigstens ein Entfernungsgrößen-Bestimmungsmittel wenigstens ein Korrelationsmittel aufweisen. Mit wenigstens einem Korrelationsmittel kann eine Korrelation denen mit den Signal-Umwandlungsmitteln ermittelten elektrischen Signalen, insbesondere den digitalisierten elektrischen Signalen, und wenigstens einer Entfernungsgröße realisiert werden. Auf diese Weise kann die wenigstens eine Entfernungsgröße einfacher aus den elektrischen Signalen, insbesondere den digitalisierten elektrischen Signalen, ermittelt werden.

Vorteilhafterweise kann wenigstens ein Korrelationsmittel wenigstens eine Korrelationstabelle aufweisen. In einer Korrelationstabelle können vorab, insbesondere am Ende eines Herstellungsprozesses der Detektionsvorrichtung, die Korrelationen zwischen den elektrischen Signalen, insbesondere den digitalisierten elektrischen Signalen, und den entsprechenden Entfernungsgrößen vorab gespeichert werden. Aus einer Korrelationstabelle kann die Korrelation schneller abgerufen werden.

Werden sowohl das elektromagnetische Echosignal als auch das elektromagnetische Abtastsignal in das Spektralanalysemittel eingekoppelt, so kann in einem definierten Zeitpunkt im Frequenzspektrum für jedes der elektromagnetischen Signale die jeweilige Spektrallinie generiert werden. Aus den elektromagnetischen Signalen in den Spektrallinien können mit den beiden entsprechenden Signal-Umwandlungsmitteln, welche den entsprechenden Frequenzen in dem definierten Zeitpunkt entsprechen, jeweilige elektrische Signalmaxima generiert werden. Aus der Korrelation dieser elektrische Signalmaxima kann direkt eine Differenzfrequenz zwischen dem Abtastsignal und dem Echosignal ermittelt werden. Alternativ kann aus der Korrelation der beteiligten zwei Signal-Umwandlungsmittel auch direkt mit entsprechender Kalibrierung die Entfernung des erfassten Objekts ermittelt werden.

Alternativ oder zusätzlich kann wenigstens eine Entfernungsgröße aus den mit den Signal-Umwandlungsmitteln ermittelten elektrischen Signalen oder den digitalisierten elektrischen Signalen berechnet werden. Auf diese Weise kann auf Korrelationstabellen verzichtet werden.

Bei einer weiteren vorteilhaften Ausführungsform kann die Empfangseinrichtung wenigstens ein Intensitätsbestimmungsmittel aufweisen zur Bestimmung einer Intensitätsgröße, welche eine Intensität wenigstens eines in die Empfangseinrichtung eingeleiteten elektromagnetischen Signals charakterisiert.

Vorteilhafterweise kann wenigstens ein Intensitätsbestimmungsmittel Additionsmittel aufweisen, mit welchem die Einzelintensitäten der Mithilfe der einzelnen Signal-Umwandlungsmittel ermittelten elektrischen Signale, insbesondere der digitalisierten elektrischen Signale, addiert werden können. Auf diese Weise kann die Intensitätsgröße einfach ermittelt werden.

Vorteilhafterweise kann wenigstens ein Intensitätsbestimmungsmittel funktional hinter wenigstens einem Digitalisierungsmittel angeordnet sein. Auf diese Weise können die digitalisierten elektrischen Signale mit entsprechenden digitalen Additionsmittel addiert werden.

Ferner wird die Aufgabe erfindungsgemäß bei der Detektionsvorrichtung dadurch gelöst, dass wenigstens ein Frequenzanalysemittel wenigstens ein Spektralanalysemittel aufweist, mit dem elektromagnetische Signale zu wenigstens einem elektromagnetischen Spektrum analysiert werden können, welches in wenigstens einem Spektrumausgabebereich des wenigstens einen Spektralanalysemittels ausgegeben werden kann,
wenigstens zwei Signal-Umwandlungsmittel, mit denen getrennte elektrische Signale ermittelt werden können, unterschiedlichen Abschnitten wenigstens eines Spektrumausgabebereichs des wenigstens eine Spektralanalysemittels zugeordnet sind,
wobei die unterschiedlichen Abschnitte wenigstens eines Spektrumausgabebereichs des wenigstens einen Spektralanalysemittels unterschiedlichen Frequenzbereichen wenigstens eines elektromagnetischen Spektrums entsprechen.

Vorteilhafterweise kann die Detektionsvorrichtung wenigstens teilweise als Ein-Chip-System realisiert sein.

Außerdem wird die Aufgabe erfindungsgemäß bei dem Fahrzeug dadurch gelöst, dass wenigstens ein Frequenzanalysemittel wenigstens ein Spektralanalysemittel aufweist, mit dem elektromagnetische Signale zu wenigstens einem elektromagnetischen Spektrum analysiert werden können, welches in wenigstens einem Spektrumausgabebereich des wenigstens einen Spektralanalysemittels ausgegeben werden kann,
wenigstens zwei Signal-Umwandlungsmittel, mit denen getrennte elektrische Signale ermittelt werden können, unterschiedlichen Abschnitten wenigstens eines Spektrumausgabebereichs des wenigstens eine Spektralanalysemittels zugeordnet sind,
wobei die unterschiedlichen Abschnitte wenigstens eines Spektrumausgabebereichs des wenigstens einen Spektralanalysemittels unterschiedlichen Frequenzbereichen wenigstens eines elektromagnetischen Spektrums entsprechen.

Vorteilhafterweise kann das Fahrzeug wenigstens ein Fahrerassistenzsystem aufweisen. Mit dem wenigstens einen Fahrerassistenzsystem können Funktionen des Fahrzeugs, beispielsweise insbesondere Fahrfunktionen oder dergleichen, autonom oder teilweise autonom betrieben werden.

Vorteilhafterweise kann wenigstens eine Detektionsvorrichtung mit wenigstens einem Fahrerassistenzsystem funktional verbunden sein. Auf diese Weise können Informationen über den Überwachungsbereich, insbesondere Objektinformationen, wie Entfernung, Geschwindigkeiten und/oder Richtungen von Objekten relativ zur Detektionsvorrichtung, respektive relativ zum Fahrzeug, an das Fahrerassistenzsystem übermittelt werden und mit diesem zur Steuerung der Funktionen des Fahrzeugs verwendet werden.

Des Weiteren wird die Aufgabe erfindungsgemäß bei dem Verfahren dadurch gelöst, dass mit wenigstens einem Spektralanalysemittel elektromagnetische Signale in wenigstens ein Spektrum analysiert werden,
das wenigstens eine Spektrum in wenigstens einem Spektrumausgabebereich des wenigstens einen Spektralanalysemittels ausgegeben wird,
unterschiedliche Bereiche des wenigstens einen elektromagnetischen Spektrums mit jeweils zugeordneten Signal-Umwandlungsmitteln zu getrennten elektrischen Signalen umgewandelt werden.

Erfindungsgemäß werden elektromagnetische Signale, insbesondere Abtastsignale und/oder Echosignale, in ein elektromagnetisches Spektrum analysiert. Das elektromagnetische Spektrum wird im Spektrumausgabebereich des Spektralanalysemittels ausgegeben. Im Spektrumausgabebereich wird das elektromagnetische Spektrum einer Mehrzahl von Signal-Umwandlungsmitteln, welche jeweils einem Frequenzbereich des Spektrums zugeordnet sind, erfasst und in jeweilige elektrische Signale umgewandelt. Mit den elektrischen Signalen werden die Frequenzverläufe der elektromagnetischen Signale, insbesondere der Abtastsignale und/oder Echosignale, charakterisiert.

Bei einer vorteilhaften Ausgestaltung des Verfahrens kann ein elektromagnetisches Abtastsignal und das entsprechende elektromagnetische Echosignal in wenigstens ein Spektralanalysemittel eingekoppelt und in wenigstens ein elektromagnetisches Spektrum analysiert werden. Auf diese Weise können das elektromagnetische Abtastsignal und das elektromagnetische Empfangssignal über die mit den Signal-Umwandlungsmitteln erzeugten elektrischen Signale einfacher miteinander verglichen werden.

Erfindungsgemäß ist das elektromagnetische Abtastsignal und damit auch das elektromagnetische Echosignal ein frequenzmoduliertes elektromagnetisches Dauerstrichsignal, wobei eine Frequenzdifferenz zwischen dem Abtastsignal und dem Echosignal aus der Position der Signal-Umwandlungsmittel, in deren Bereich zu einem definierten Zeitpunkt die entsprechenden Spektrallinien des Abtastsignals und des Echosignals liegen, ermittelt wird. Aus der Frequenzdifferenz kann eine Entfernung eines erfassten Objekts ermittelt werden.

Im Übrigen gelten die im Zusammenhang mit der erfindungsgemäßen Empfangseinrichtung, der erfindungsgemäßen Detektionsvorrichtung, dem erfindungsgemäßen Fahrzeug und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Fahrzeug in der Vorderansicht mit einem Fahrerassistenzsystem und einem LiDAR-System zur Überwachung eines Überwachungsbereichs 13 in Fahrtrichtung vor dem Fahrzeug;
- Figur 2: eine Funktionsdarstellung des LiDAR-Systems aus der Figur 1;
- Figur 3: ein Frequenz-Zeit-Diagramm eines elektromagnetischen Abtastsignals beispielhaft in Form eines frequenzmodulierten Dauerstrichsignals des LiDAR-Systems aus den Figuren 1 und 2 zur Überwachung des Überwachungsbereichs und eines entsprechenden elektromagnetischen Echosignals des reflektierten Abtastsignals;
- Figur 4: einen Ausschnitt des Frequenz-Zeit-Diagramms aus der Figur 3, mit einer Abtastsequenz des elektromagnetischen Abtastsignals und einer entsprechenden Echosequenz des elektromagnetischen Echosignals, wobei auf der Frequenzachse jeweilige Frequenzbereiche des Frequenzspektrums der elektromagnetischen Signale markiert sind, welchen jeweils in einem Spektrumsabschnitt eines Spektrumausgabebereichs eines Spektroskops des LiDAR-Systems aus der Figur 2 abgebildet werden,
- Figur 5: ein Frequenzspektrum des elektromagnetischen Abtastsignals und des elektromagnetischen Echosignals aus der Figur 4 im Spektrumausgabebereich des Spektroskops zu einem Zeitpunkt T.

In den Figuren sind gleiche Bauteile mit gleichen Bezugszeichen versehen.

### Ausführungsform(en) der Erfindung

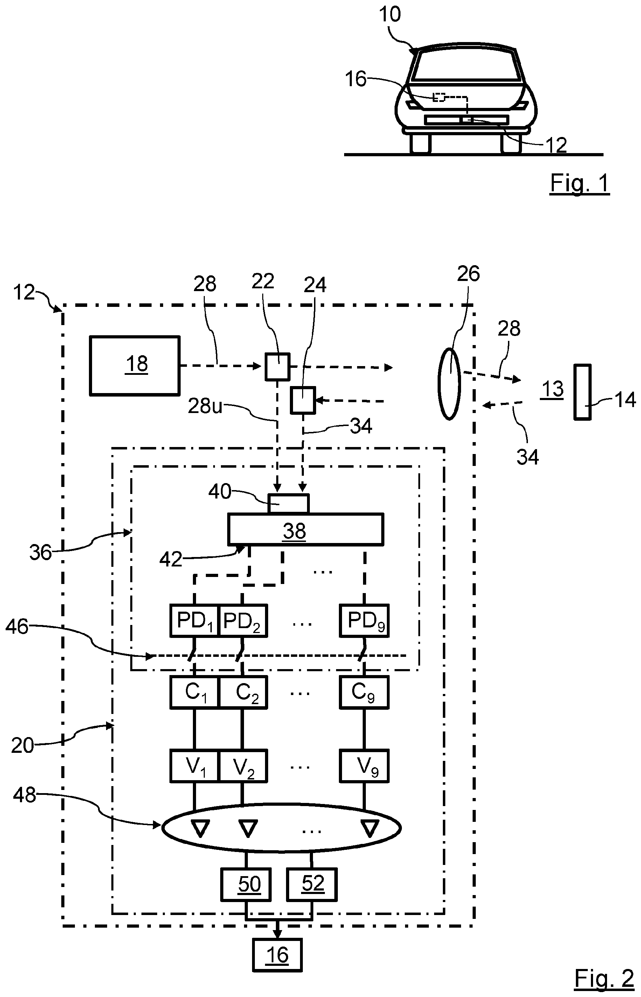

In der Figur 1 ist ein Fahrzeug 10 beispielhaft in Form eines Personenkraftwagens in der Vorderansicht gezeigt.

Das Fahrzeug 10 verfügt über eine Detektionsvorrichtung beispielhaft in Form eines LiDAR-Systems 12. Das LiDAR-System 12 ist beispielhaft in der vorderen Stoßstange des Fahrzeugs 10 angeordnet. Mit dem LiDAR-System 12 kann ein Überwachungsbereich 13 in Fahrtrichtung vor dem Fahrzeug 10 auf Objekte 14 hin überwacht werden. Das LiDAR-System 12 kann auch an anderer Stelle am Fahrzeug 10 angeordnet und anders ausgerichtet sein. Mit dem LiDAR-System 12 können Objektinformationen, beispielsweise Entfernungen, Richtungen und Geschwindigkeiten von Objekten 14 relativ zu wenigstens einem Bezugsbereich des Fahrzeugs 10 und/oder des LiDAR-Systems 12, beispielsweise einer Längsachse oder einer Querachse des Fahrzeugs 10, ermittelt werden. Die Richtungen von Objekten können beispielsweise als Azimut und/oder Elevation angegeben werden.

Bei den Objekten 14 kann es sich um stehende oder bewegte Objekte, beispielsweise um andere Fahrzeuge, Personen, Tiere, Pflanzen, Hindernisse, Fahrbahnunebenheiten, beispielsweise Schlaglöcher oder Steine, Fahrbahnbegrenzungen, Verkehrszeichen, Freiräume, Beispielweise Parklücken, Niederschlag oder dergleichen handeln.

Das LiDAR-System 12 ist beispielhaft als frequenzmoduliertes Dauerstrich-LiDAR-System ausgestaltet. Frequenzmodulierte Dauerstrich-LiDAR-Systeme werden in Fachkreisen auch als FMCW- (Frequency modulated continuous wave) LiDAR-Systeme bezeichnet. Mit dem LiDAR-System 12 können nach einem Flugzeitverfahren (TOF- Verfahren) Entfernungen von Objekten 14 ermittelt werden.

Das LiDAR-System 12 ist mit einem Fahrerassistenzsystem 16 verbunden. Mit dem Fahrerassistenzsystem 16 kann das Fahrzeug 10 autonom oder teilautonom betrieben werden.

Das LiDAR-System 12 ist beispielhaft als sogenanntes Ein-Chip-System ausgestaltet, bei dem ein Großteil der Bauteile auf einem Chip realisiert sind. Beispielhaft kann ein Teil der Strukturen des LiDAR-Systems 12 auf einem optischen Siliziumchip (SoC) integriert sein. Alternativ kann das LiDAR-System 12 auch in anderer Weise realisiert sein.

Das LiDAR-System 12 ist in der Figur 2 in einer Funktionsdarstellung gezeigt. Das LiDAR-System 12 umfasst eine Sendeeinrichtung 18, eine Empfangseinrichtung 20, einen Strahlteiler 22, einen Strahlumlenker 24 und eine Linse 26.

Die Sendeeinrichtung 18 umfasst Signalerzeugungsmittel, mit denen elektrische Sendesignale beispielhaft in Form von frequenzmodulierten Dauerstrichsignalen erzeugt werden können. Ein elektrische Sendesignal umfasst eine Vielzahl von hintereinander folgenden Sendesequenzen beispielhaft in Form von Frequenzrampen.

Eine elektromagnetische Signalquelle der Sendeeinrichtung 18 kann mit den elektrischen Sendesignalen angesteuert werden, sodass sie entsprechende elektromagnetische Abtastsignale 28 beispielhaft in Form von Laserpulsen in den Überwachungsbereich 13 sendet. Die Sendeeinrichtung 18 kann als elektromagnetische Signalquelle beispielsweise einen oder mehrere Laser aufweisen.

Die elektromagnetische Abtastsignale 28 sind wie die erzeugenden elektrischen Sendesignale frequenzmodulierte Dauerstrichsignale. Ein elektromagnetisches Abtastsignal 28 umfasst eine Vielzahl von hintereinander folgenden Abtastsequenzen 30 beispielhaft in Form von Frequenzrampen.

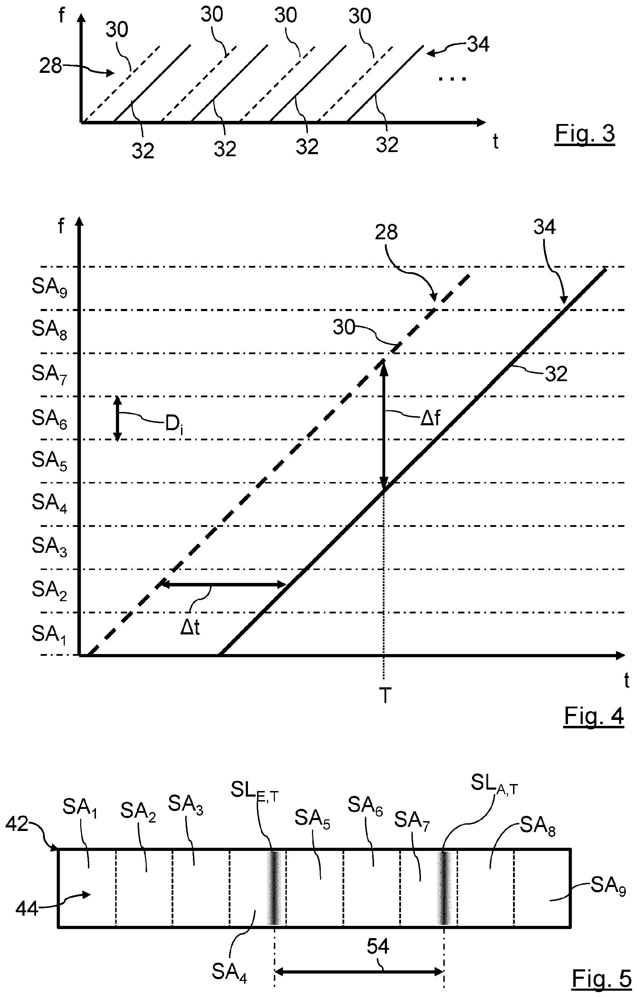

In der Figur 3 sind in einem Frequenz-Zeit-Diagramm beispielhaft einige Abtastsequenzen 30 eines elektromagnetischen Abtastsignals 28 gestrichelt und zum Vergleich entsprechende Echosequenzen 32 eines elektromagnetischen Echosignals 34 gezeigt. Das elektromagnetische Echosignal entspricht dem an einem Objekt 14 reflektierten elektromagnetischen Abtastsignalen 28.

Figur 4 zeigt einen Ausschnitt des Frequenzzeit Diagramms mit einer Abtastsequenz 30 des Abtastsignals 28 und der entsprechenden Echosequenz 32 des Echosignals 34.

Im Strahlengang der Abtastsignale 28 hinter der Sendeeinrichtung 18 ist der Strahlteiler 22 angeordnet. Mit dem Strahlteiler 22 wird ein Teil der Abtastsignale 28 zur Empfangseinrichtung 20 hin umgelenkt. Der umgelenkte Teil der Abtastsignale 28 ist in der Figur 2 der einfacheren Unterscheidbarkeit wegen mit dem Bezugszeichen "28u" bezeichnet.

Im Strahlengang der Abtastsignale 28 hinter dem Strahlteiler 22 ist die Linse 26 angeordnet. Mit der Linse 26 wird der nicht abgelenkte Teil der Abtastsignale 28 geformt, beispielsweise fokussiert und/oder oder aufgeweitet, und in den Überwachungsbereich 13 gelenkt.

Mit der Linse 26 können außerdem aus dem Überwachungsbereich 13 kommende Echosignale 34 auf den Strahlumlenker 24 gelenkt werden. Der Strahlumlenker 24 befindet sich im Strahlengang der Echosignale 34 zwischen der Linse 26 und der Empfangseinrichtung 20.

Der Strahlumlenker 24 kann beispielsweise als Prisma, Spiegel oder dergleichen ausgestaltet sein. Mit dem Strahlumlenker 24 können die Echosignale 34 zu der Empfangseinrichtung 20 umgelenkt werden.

Die Empfangseinrichtung 20 verfügt über ein Frequenzanalysemittel 36. Mit dem Frequenzanalysemittel 36 können die Echosignale 34 und die abgelenkten Abtastsignale 28u bezüglich ihrer Frequenz analysiert werden. Das Frequenzanalysemittel 36 umfasst ein Spektralanalysemittel beispielhaft in Form eines Spektroskops 38 und eine Vielzahl von Signal-Umwandlungsmitteln beispielhaft in Form von Photodioden PD. Mit den Photodioden PD können elektromagnetische Signale in elektrische Signale umgewandelt werden.

Beispielhaft weist die Empfangseinrichtung 20 bei dem in den Figuren beschriebenen Beispiel der besseren Übersichtlichkeit wegen lediglich 9 Photodioden PD₁ bis PD₉ auf. In der Praxis werden deutlich mehr Photodioden, beispielsweise mehrere hundert Photodioden verwendet, um eine entsprechende Auflösung bei der Ermittlung der Entfernungsgrößen zu erreichen.

Im Folgenden sind die Bezugszeichen der den Photodioden PD₁ bis PD₉ jeweils zugeordneten Bauteile zur einfacheren Zuordnung wegen ebenfalls mit Indizes zwischen 1 und 9 versehen.

Das Spektroskop 38 verfügt über einen Signaleinkopplungsbereich 40 und einen Spektrumausgabebereich 42. In dem Signaleinkopplungsbereich 40 werden die zu Echosignale 34 und die abgelenkten Abtastsignale 28u so eingeleitet, dass sie gleichermaßen einer Frequenzanalyse unterzogen werden. Mit dem Spektroskop 38 werden dabei die Echosignale 34 und die abgelenkten Abtastsignale 28u jeweils bezüglich ihrer Wellenlänge, also ihrer Frequenz, aufgetrennt. Das aus den Echosignalen 34 und den abgelenkten Abtastsignalen 28u ermittelte Frequenzspektrum 44 wird in dem Spektrumausgabebereich 42 ausgegeben. In der Figur 5 ist beispielhaft das Frequenzspektrum 44 eines Abtastsignals 28u und eines Echosignals 34 zu einem Zeitpunkt T gezeigt.

Die räumliche Ausdehnung des Spektrumausgabebereichs 42 in Richtung der Frequenzauflösung ist an die maximale Bandbreite von Frequenzen der Abtastsignale 28 und der Echosignale 34 angepasst. Dabei ist die räumliche Ausdehnung des Spektrumausgabebereichs 42 mindestens so groß, dass alle möglichen Frequenzen der Abtastsignale 28 und der Echosignale 34 ausgegeben werden können.

Jede der Photodioden PD₁ bis PD₉ ist einem entsprechenden Spektrumsabschnitt SA₁ bis SA₉ des Spektrumausgabebereichs 42 zugeordnet. In der Figur 5 sind beispielhaft die neun Spektrumsabschnitte SA₁ bis SA₉ dargestellt. Die Photodioden PD₁ bis PD₉ können die elektromagnetischen Signale, beispielsweise in Form von Spektrallinien, aus den ihnen jeweils zugeordneten Spektrumsabschnitten SA₁ bis SA₉ in jeweilige elektrische Signale umwandeln.

Ferner verfügt das Frequenzanalysemittel 36 über ein Aufnahmesteuermittel beispielhaft in Form einer Triggereinrichtung 46. Mit der Triggereinrichtung 46 kann ein Aufnahme-Startzeitpunkt und eine Aufnahmedauer für die Aufnahme des Frequenzspektrums 44 mit den Photodioden PD₁ bis PD₉ definiert werden. Mit der Triggereinrichtung 46 können die Ausgänge der Photodioden PD₁ bis PD₉ gleichzeitig geschaltet werden. So können Momentaufnahmen des gesamten Spektrums 44 durchgeführt werden.

Jeder Photodiode PD₁ bis PD₉ ist ein elektrisches Speichermittel beispielhaft in Form einer Analogspeicherzelle C₁ bis C₉ zugeordnet. Die Analogspeicherzellen C₁ bis C₉ sind funktional hinter der Triggereinrichtung 46 angeordnet und jeweils mit der Ausgangsseite der entsprechenden Photodiode PD₁ bis PD₉ verbunden. In den Analogspeicherzellen C₁ bis C₉ können die mit den Photodioden PD₁ bis PD₉ ermittelten elektrischen Signale zwischengespeichert werden. So kann eine folgende Signalübermittlung verlangsamt werden.

Funktional hinter jeder Analogspeicherzelle C₁ bis C₉ ist ein Vorverstärker V₁ bis V₉ angeordnet. Mit den Vorverstärkern V₁ bis V₉ können die jeweiligen elektrischen Signale verstärkt werden. So kann ein Signal-Rausch-Verhältnis verbessert werden.

Alternativ oder zusätzlich können entsprechende Vorverstärker auch funktional vor den Analogspeicherzellen C₁ bis C₉, beispielsweise zwischen den Photodioden PD₁ bis PD₉ und den Analogspeicherzellen C₁ bis C₉, angeordnet sein. Auf diese Weise können die elektrischen Signale der Photodioden PD₁ bis PD₉ verstärkt werden, bevor sie zu den Analogspeicherzellen C₁ bis C₉ gelangen.

Funktional hinter den Vorverstärkern V₁ bis V₉ ist eine Digitalisierungseinrichtung 48 angeordnet. Mit der Digitalisierungseinrichtung 48 können die vorverstärkten analogen elektrischen Signale der Photodioden PD₁ bis PD₉ digitalisiert werden. Hierzu kann die Digitalisierungseinrichtung 48 beispielsweise eine Mehrzahl von Analog-Digital-Wandlern aufweisen.

Funktional hinter der Digitalisierungseinrichtung 48 ist ein Entfernungsgrößen-Bestimmungsmittel 50 angeordnet. Mit dem Entfernungsgrößen-Bestimmungsmittel 50 kann aus den digitalen elektrischen Signalen eine Entfernungsgröße ermittelt werden, welche eine Entfernung des mit dem LiDAR-System 12 erfassten Objekts 14 relativ zu dem LiDAR-System 12 charakterisiert. Die Entfernungsgröße ist beispielsweise ein Maß für die Frequenzdifferenz Δf zwischen dem Echosignal 34 und dem abgelenkten Abtastsignal 28u.

Das Entfernungsgrößen-Bestimmungsmittel 50 weist Korrelationsmittel beispielhaft in Form einer Korrelationstabelle auf, mit welcher der Entfernungsgröße die entsprechende Entfernung des Objekts 14 zugeordnet werden kann. Die Korrelationstabelle kann vorab beispielsweise im Rahmen einer Kalibrationsmessung, beispielsweise am Ende einer Produktionslinie, mit dem LiDAR-System 12 ermittelt werden.

In der Korrelationstabelle können beispielsweise Kombinationen von Photodioden PD, welche bei einer Momentaufnahme eine weiter unten beschriebene Abtast-Spektrallinie SL_{A} und eine entsprechende Echo-Spektrallinie SL_{E} des Spektrums 44 bei definierten Entfernungen eines Objekts 14 erfassen, mit den entsprechenden Entfernungen korreliert werden

Ferner ist funktional hinter der Digitalisierungseinrichtung 48 ein optisches Intensitätsbestimmungsmittel 52 angeordnet. Mit dem optischen Identitätsbestimmungsmittel 52 kann aus den digitalen elektrischen Signalen der einzelnen Photodioden PD₁ bis PD₉ die Intensität der Echosignale 34 und die Intensität der abgelenkten Abtastsignale 28u ermittelt werden. Hierzu können die entsprechenden digitalisierten Einzelsignale der Photodioden PD₁ bis PD₉ zu dem jeweiligen Gesamtsignal wieder zusammengesetzt werden.

Die Analogspeicherzellen C₁ bis C₉, die Vorverstärker V₁ bis V₉, die Digitalisierungseinrichtung 48, dass Entfernungsgrößen-Bestimmungsmittel 50 und das optische Identitätsbestimmungsmittel 52 sind beispielhaft Teil der Empfangseinrichtung 20.

Die mit der Empfangseinrichtung 20 ermittelten Informationen, respektive die Entfernung, die Intensität der Echosignale 34 und Intensität der abgelenkten Abtastsignale 28u, können über eine entsprechende Verbindung an das Fahrerassistenzsystem 16 übermittelt werden.

Zum Betreiben des LiDAR-Systems 12 wird mit der Sendeeinrichtung 18 ein elektromagnetisches Abtastsignal 28 zu dem Strahlteiler 22 gesendet.

Mit dem Strahlteiler 22 wird ein Teil des elektromagnetischen Abtastsignals 28 abgeteilt und zu dem Signaleinkopplungsbereich 40 des Spektroskops 38 gesendet.

Der nicht abgeteilt Teil des Abtastsignals 28 gelangt durch die Linse 26 in den Überwachungsbereich 13. Das Abtastsignal 28 wird an einem Objekt 14 reflektiert. Das reflektierte Echosignal 34 gelangt durch die Linse 26 zu dem Strahlumlenker 24.

Mit dem Strahlumlenker 24 wird das Echosignal 34 in den Signaleinkopplungsbereich 40 des Spektroskops 38 gelenkt.

In der Figur 4 sind in einem Frequenz-Zeit-Diagramm beispielhaft eine Abtastsequenz 30 des abgelenkten Abtastsignals 28u und eine Echosequenz 32 des Echosignals 34, wie sie dem Signaleinkopplungsbereich 40 zugeführt werden, gezeigt.

Aufgrund der Flugzeit zwischen dem Aussenden der Abtastsequenz 30 mit der Sendeeinrichtung 18 und dem Empfang der Echosequenz 32 mit der Empfangseinrichtung 20 ist, wie in der Figur 4 gezeigt, die Echosequenz 32 gegenüber der Abtastsequenz 30 um die Flugzeit Δt verschoben. Da es sich um frequenzmodulierte Dauerstrichsignale handelt, ist darüber hinaus zu jedem Zeitpunkt die Frequenz der Echosequenz 32 um die Frequenzdifferenz Δf gegenüber der Frequenz der Abtastsequenz 30 verschoben.

Mit dem Spektroskop 38 werden das abgelenkte Abtastsignal 28u und das Echosignal 34 gleichermaßen bezüglich ihrer Frequenz analysiert. In dem Spektrumausgabebereich 42 des Spektroskops 38 wird das entsprechende Frequenzspektrum 44 ausgegeben. Das ausgegebene Frequenzspektrum 44 setzt sich zusammen aus dem Spektrum des abgelenkten Abtastsignals 28 und dem Spektrum des Echosignals 34. Entsprechend des frequenzmodulierten Signalverlaufs des Abtastsignals 28 und damit des Echosignals 34 verändert sich das Spektrum 44 mit der Zeit. Da sowohl das abgelenkte Abtastsignal 28u als auch das entsprechende Echosignal 34 dem gleichen Signaleinkopplungsbereich 40 der Empfangseinrichtung 20 zugeführt und in gleicher Weise bezüglich der Frequenz analysiert werden, können die Frequenzspektren des Abtastsignals 28u und des Echosignals 34 in dem einen Frequenzspektrum 44 direkt gegenübergestellt werden.

In der Figur 5 ist beispielhaft eine Momentaufnahme des Frequenzspektrums 44 zu dem Zeitpunkt T gezeigt. Das Frequenzspektrum 44 weist beispielhaft eine Abtast-Spektrallinie SL_{A,T} und eine Echo-Spektrallinie SL_{E,T} auf. Die Abtast-Spektrallinie SL_{A,T} stammt von dem Abtastsignal 28u. Die Lage der Abtast-Spektrallinie SL_{A,T} in dem Frequenzspektrum 44 charakterisiert die Frequenz des Abtastsignals 28u zum Zeitpunkt T. Die Abtast-Spektrallinie SL_{E,T} stammt von einem Echosignal 34. Die Lage der Abtast-Spektrallinie SL_{A,T} in dem Frequenzspektrum 44 charakterisiert die Frequenz des Echosignals 34 zum Zeitpunkt T.

Ein räumlicher Linienabstand 54 zwischen der Abtast-Spektrallinie SL_{A,T} und der Echo-Spektrallinie SL_{E,T} auf der Spektrumsauftrittsseite 42 ist ein Maß für die Frequenzdifferenz Δf zwischen dem abgelenkten Abtastsignal 28u und dem Echosignal 34. Die Frequenzdifferenz Δf und damit der Linienabstand 54 korrelieren mit der Entfernung des Objekts 14 von dem LiDAR-System 12.

Mit den Photodioden PD₁ bis PD₉ werden die Signalanteile des Spektrums 44 in den entsprechenden Spektrumsabschnitten SA₁ bis SA₉ erfasst und jeweils in elektrische Signale umgewandelt. Die elektrischen Signale liegen an den Ausgängen der Photodioden PD₁ bis PD₉ an.

Durch entsprechende Ansteuerung mit der Triggereinrichtung 46 werden die elektrischen Signale an den Ausgängen der Photodioden PD₁ bis PD₉ gleichzeitig ausgelesen und an die entsprechenden Analogspeicherzellen C₁ bis C₉ übermittelt. In den Analogspeicherzellen C₁ bis C₉ liegt die Momentaufnahme des Spektrums 44 beispielsweise zum Zeitpunkt T in Form von elektrischen Signalen an. Bei der in Figur 5 gezeigt Momentaufnahme werden mit der Photodiode PD₄ die Echo-Spektrallinie SL_{E,T} und mit der Photodiode PD₇ die Abtast-Spektrallinie SL_{A,T} erfasst.

Die elektrischen Signale werden aus den Analogspeicherzellen C₁ bis C₉ den jeweilig Vorverstärkern V₁ bis V₉ zugleitet und mit diesen verstärkt.

Anschließend werden die verstärkten elektrischen Signale mit der Digitalisierungseinrichtung 48 digitalisiert.

Die digitalen verstärkten elektrischen Signale werden der Entfernungsgrößen-Bestimmungsmittel 50 zugeführt. Da die Positionen der Photodioden PD₁ bis PD₉ definiert den Spektrumsabschnitten SA₁ bis SA₉ zugeordnet sind, wird aus der Kombination der Photodioden PD, in dem Beispiel der Photodiode PD₄ und der Photodiode PD₇, welche die Abtast-Spektrallinie SL_{A,T} und die Echo-Spektrallinie SL_{E,T} erfassen, die Entfernung ermittelt.

Ferner werden die verstärkten digitalen elektrischen Signale aller Photodioden-Zweige dem optischen Intensitätsbestimmungsmittel 52 zugeführt. Mit dem optischen Intensitätsbestimmungsmittel 52 werden die digitalen elektrischen Signale zusammengeführt. Aus der Zusammenführung werden die Intensitäten der Abtastsignale 28u und der Echosignale 34 ermittelt.

Die Entfernungsgrößen und die Intensitäten werden dem Fahrerassistenzsystem 16 übermittelt. Mit dem Fahrerassistenzsystem 16 wird das Fahrzeug 10 zumindest teilautonom betrieben.

## Patentansprüche

1. Empfangseinrichtung (20) einer Detektionsvorrichtung (12) zur Überwachung wenigstens eines Überwachungsbereichs (13) auf Objekte (14) hin mittels elektromagnetischer Abtastsignale (28),
mit einem Signal-Umwandlungsmittel (PD₁, PD₂, PD₃, PD₄, PD₅, PD₆, PD₇, PD₈, PD₉) zur Umwandlung von elektromagnetischen Signalen (28u, 34), welche von elektromagnetischen Abtastsignalen (28) stammen, in elektrische Signale,
und mit wenigstens einem Frequenzanalysemittel (36) zur Frequenzanalyse von Signalen,
wobei wenigstens ein Frequenzanalysemittel (36) wenigstens ein Spektralanalysemittel (38) aufweist, mit dem elektromagnetische Signale (28u, 34) zu wenigstens einem elektromagnetischen Spektrum (44) analysiert werden können, welches in wenigstens einem Spektrumausgabebereich (42) des wenigstens einen Spektralanalysemittels (38) ausgegeben werden kann,
wobei wenigstens zwei Signal-Umwandlungsmittel (PD₁, PD₂, PD₃, PD₄, PD₅, PD₆, PD₇, PD₈, PD₉), mit denen getrennte elektrische Signale ermittelt werden können, die unterschiedlichen Abschnitten (SA₁, SA₂, SA₃, SA₄, SA₅, SA₆, SA₇, SA₈, SA₉) wenigstens eines Spektrumausgabebereichs (42) des wenigstens einen Spektralanalysemittels (38) zugeordnet sind,
wobei die unterschiedlichen Abschnitte (SA₁, SA₂, SA₃, SA₄, SA₅, SA₆, SA₇, SA₈, SA₉) wenigstens eines Spektrumausgabebereichs (42) des wenigstens einen Spektralanalysemittels (38) unterschiedlichen Frequenzbereichen wenigstens eines elektromagnetischen Spektrums (44) entsprechen,
wobei das elektromagnetische Abtastsignal (28) und damit auch das elektromagnetische Echosignal (34) ein frequenzmoduliertes elektromagnetisches Dauersignal ist und **dadurch gekennzeichnet, dass** eine Frequenzdifferenz zwischen Abtastsignal (28) und Echosignal (34) aus der Position der Signalumwandlungsmittel (PD₁, PD₂, PD₃, PD₄, PD₅, PD₆, PD₇, PD₈, PD₉), in deren Bereich zu einem definierten Zeitpunkt entsprechende Spektrallinien des Abtastsignals (28) und des Echosignals (34) liegen, ermittelt wird.

2. Empfangseinrichtung nach Anspruch 1, **dadurch gekennzeichnet, dass** wenigstens ein Spektralanalysemittel (38) wenigstens einen Spektralapparat aufweist.

3. Empfangseinrichtung nach Anspruch 1 oder 2, **dadurch gekennzeichnet, dass** wenigstens ein Signal-Umwandlungsmittel (PD₁, PD₂, PD₃, PD₄, PD₅, PD₆, PD₇, PD₈, PD₉) wenigstens ein elektrooptisches Bauteil aufweist, mit dem elektromagnetische Signale (28u, 34) in elektrische Signale umgewandelt werden können.

4. Empfangseinrichtung nach einem der vorigen Ansprüche, **dadurch gekennzeichnet, dass** wenigstens ein Frequenzanalysemittel (36) wenigstens ein Aufnahmesteuermittel (46) aufweist, mit welchem ein jeweiliger Aufnahme-Startzeitpunkt (T) und/oder eine jeweilige Aufnahmedauer für wenigstens einen Teil der Signal-Umwandlungsmittel (PD₁, PD₂, PD₃, PD₄, PD₅, PD₆, PD₇, PD₈, PD₉) gesteuert werden kann.

5. Empfangseinrichtung nach einem der vorigen Ansprüche, **dadurch gekennzeichnet, dass** die Empfangseinrichtung (20) wenigstens ein Speichermittel (C₁, C₂, C₃, C₄, C₅, C₆, C₇, C₈, C₉) aufweist zur Speicherung wenigstens eines Teils der mit den Signal-Umwandlungsmitteln (PD₁, PD₂, PD₃, PD₄, PD₅, PD₆, PD₇, PD₈, PD₉) ermittelten elektrischen Signale.

6. Empfangseinrichtung nach einem der vorigen Ansprüche, **dadurch gekennzeichnet, dass** die Empfangseinrichtung (20) wenigstens ein Verstärkungsmittel (V₁, V₂, V₃, V₄, V₅, V₆, V₇, V₈, V₉) aufweist zur Verstärkung wenigstens eines Teils der mit den Signal-Umwandlungsmitteln (PD₁, PD₂, PD₃, PD₄, PD₅, PD₆, PD₇, PD₈, PD₉) ermittelten elektrischen Signale.

7. Empfangseinrichtung nach einem der vorigen Ansprüche, **dadurch gekennzeichnet, dass** die Empfangseinrichtung (20) wenigstens ein Digitalisierungsmittel (48) **auf**weist zur Digitalisierung wenigstens eines Teils der mit den Signal-Umwandlungsmitteln (PD₁, PD₂, PD₃, PD₄, PD₅, PD₆, PD₇, PD₈, PD₉) ermittelten elektrischen Signale.

8. Empfangseinrichtung nach einem der vorigen Ansprüche, **dadurch gekennzeichnet,**
**dass** wenigstens ein Frequenzanalysemittel (36) wenigstens einen Signaleinkopplungsbereich (40) aufweist zur Einkopplung von elektromagnetischen Signalen (28u, 34).

9. Empfangseinrichtung nach einem der vorigen Ansprüche, **dadurch gekennzeichnet, dass** die Empfangseinrichtung (20) wenigstens ein Empfangsgrößen-Bestimmungsmittel (50) aufweist zur Ermittlung wenigstens einer Empfangsgröße (54) für wenigstens ein erfasstes Objekt (14) direkt oder indirekt aus elektrischen Signalen, die mit den Signal-Umwandlungsmitteln (PD₁, PD₂, PD₃, PD₄, PD₅, PD₆, PD₇, PD₈, PD₉) ermittelt werden können.

10. Empfangseinrichtung nach einem der vorigen Ansprüche, **dadurch gekennzeichnet, dass** die Empfangseinrichtung (20) wenigstens ein Intensitätsbestimmungsmittel (52) aufweist zur Bestimmung einer Intensitätsgröße, welche eine Intensität wenigstens eines in die Empfangseinrichtung (20) eingeleiteten elektromagnetischen Signals (28u, 34) charakterisiert.

11. Detektionsvorrichtung (12) zur Überwachung wenigstens eines Überwachungsbereichs (13) auf Objekte (14) hin mittels elektromagnetischer Abtastsignale (28), mit wenigstens einer Sendeeinrichtung (18) zum Senden von elektromagnetischen Abtastsignalen (28) in wenigstens einen Überwachungsbereich (13), mit wenigstens einer Empfangseinrichtung (20) gemäß Anspruch 1.

12. Fahrzeug (10) mit wenigstens einer Detektionsvorrichtung (12) gemäß Anspruch 11.

13. Verfahren zum Betreiben einer Detektionsvorrichtung (12) zur Überwachung wenigstens eines Überwachungsbereichs (13) auf Objekte (14) hin,
bei dem mit wenigstens einer Sendeeinrichtung (18) wenigstens ein elektromagnetisches Abtastsignal (28) in den wenigstens einen Überwachungsbereich (13) gesendet wird,
elektromagnetische Echosignale (34) aus im wenigstens einen Überwachungsbereich (13) reflektierten elektromagnetischen Abtastsignalen (28) mit wenigstens einem Signal-Umwandlungsmittel (PD₁, PD₂, PD₃, PD₄, PD₅, PD₆, PD₇, PD₈, PD₉) einer Empfangseinrichtung (20) in elektrische Signale umgewandelt werden,
mit wenigstens einem Frequenzanalysemittel (36) der wenigstens einen Empfangseinrichtung (20) Signale (34) einer Frequenzanalyse unterzogen werden,
mit wenigstens einem Spektralanalysemittel (38) elektromagnetische Signale (34) in wenigstens ein Spektrum (44) analysiert werden,
das wenigstens eine Spektrum (44) in wenigstens einem Spektrumausgabebereich (42) des wenigstens einen Spektralanalysemittels (38) ausgegeben wird, unterschiedliche Bereiche des wenigstens einen elektromagnetischen Spektrums (44) mit jeweils zugeordneten Signal-Umwandlungsmittel (PD₁, PD₂, PD₃, PD₄, PD₅, PD₆, PD₇, PD₈, PD₉) zu getrennten elektrischen Signalen umgewandelt werden,
wobei das elektronische Abtastsignal (28) und damit auch das elektromagnetische Echosignal (34) ein frequenzmoduliertes elektromagnetisches Dauersignal ist und **dadurch gekennzeichnet, dass** eine Frequenzdifferenz zwischen Abtastsignal (28) und Echosignal (34) aus der Position der Signalumwandlungsmittel (PD₁, PD₂, PD₃, PD₄, PD₅, PD₆, PD₇, PD₈, PD₉), in deren Bereich zu einem definierten Zeitpunkt entsprechende Spektrallinien des Abtastsignals (28) und des Echosignals (34) liegen, ermittelt wird.

14. Verfahren nach Anspruch 13, **dadurch gekennzeichnet, dass** ein elektromagnetisches Abtastsignal (28u) und das entsprechende elektromagnetische Echosignal (34) in wenigstens ein Spektralanalysemittel (38) eingekoppelt und in wenigstens ein elektromagnetisches Spektrum (44) analysiert werden.

## Claims

1. Receiving device (20) of a detection apparatus (12) for monitoring at least one monitoring region (13) for objects (14) by means of electromagnetic scanning signals (28),
comprising a signal converting means (PD₁, PD₂, PD₃, PD₄, PD₅, PD₆, PD₇, PD₈, PD₉) for converting electromagnetic signals (28u, 34), which originate from electromagnetic scanning signals (28), into electrical signals,
and comprising at least one frequency analysing means (36) for analysing the frequency of signals,
wherein at least one frequency analysing means (36) includes at least one spectral analysing means (38), using which electromagnetic signals (28u, 34) can be analysed to form at least one electromagnetic spectrum (44), which can be output in at least one spectrum output region (42) of the at least one spectral analysing means (38),
wherein at least two signal converting means (PD₁, PD₂, PD₃, PD₄, PD₅, PD₆, PD₇, PD₈, PD₉), using which separate electrical signals can be determined, are assigned to different sections (SA₁, SA₂, SA₃, SA₄, SA₅, SA₆, SA₇, SA₈, SA₉) of at least one spectrum output region (42) of the at least one spectral analysing means (38),
wherein the different sections (SA₁, SA₂, SA₃, SA₄, SA₅, SA₆, SA₇, SA₈, SA₉) of at least one spectrum output region (42) of the at least one spectral analysing means (38) correspond to different frequency ranges of at least one electromagnetic spectrum (44),
wherein the electromagnetic scanning signal (28), and thus also the electromagnetic echo signal (34), is a frequency-modulated electromagnetic continuous signal, and
**characterized in that**
a frequency difference between the scanning signal (28) and the echo signal (34) is determined from the position of the signal converting means (PD₁, PD₂, PD₃, PD₄, PD₅, PD₆, PD₇, PD₈, PD₉), in the range of which at a defined point in time corresponding spectral lines of the scanning signal (28) and of the echo signal (34) are located.

2. Receiving device according to Claim 1, **characterized in that** at least one spectral analysing means (38) includes at least one spectral apparatus.

3. Receiving device according to Claim 1 or 2, **characterized in that** at least one signal converting means (PD₁, PD₂, PD₃, PD₄, PD₅, PD₆, PD₇, PD₈, PD₉) includes at least one electro-optical component, using which electromagnetic signals (28u, 34) can be converted into electrical signals.

4. Receiving device according to one of the preceding claims, **characterized in that** at least one frequency analysing means (36) includes at least one recording control means (46), using which a respective recording starting point in time (T) and/or a respective recording duration can be controlled for at least a part of the signal converting means (PD₁, PD₂, PD₃, PD₄, PD₅, PD₆, PD₇, PD₈, PD₉).

5. Receiving device according to one of the preceding claims, **characterized in that** the receiving device (20) includes at least one storage means (C₁, C₂, C₃, C₄, C₅, C₆, C₇, C₈, C₉) for storing at least some of the electrical signals determined using the signal converting means (PD₁, PD₂, PD₃, PD₄, PD₅, PD₆, PD₇, PD₈, PD₉).

6. Receiving device according to one of the preceding claims, **characterized in that** the receiving device (20) includes at least one amplifying means (V₁, V₂, V₃, V₄, V₅, V₆, V₇, V₈, V₉) for amplifying at least some of the electrical signals determined using the signal converting means (PD₁, PD₂, PD₃, PD₄, PD₅, PD₆, PD₇, PD₈, PD₉).

7. Receiving device according to one of the preceding claims, **characterized in that** the receiving device (20) includes at least one digitizing means (48) for digitizing at least some of the electrical signals determined using the signal converting means (PD₁, PD₂, PD₃, PD₄, PD₅, PD₆, PD₇, PD₈, PD₉).

8. Receiving device according to one of the preceding claims, **characterized in that** at least one frequency analysing means (36) includes at least one signal coupling region (40) for coupling in electromagnetic signals (28u, 34).

9. Receiving device according to one of the preceding claims, **characterized in that** the receiving device (20) includes at least one receiving variable determining means (50) for determining at least one receiving variable (54) for at least one detected object (14) directly or indirectly from electrical signals which can be determined using the signal converting means (PD₁, PD₂, PD₃, PD₄, PD₅, PD₆, PD₇, PD₈, PD₉).

10. Receiving device according to one of the preceding claims, **characterized in that** the receiving device (20) includes at least one intensity determining means (52) for determining an intensity variable, which characterizes an intensity of at least one electromagnetic signal (28u, 34) introduced into the receiving device (20).

11. Detection apparatus (12) for monitoring at least one monitoring region (13) for objects (14) by means of electromagnetic scanning signals (28),
comprising at least one emitting device (18) for emitting electromagnetic scanning signals (28) into at least one monitoring region (13),
comprising at least one receiving device (20) according to Claim 1.

12. Vehicle (10) having at least one detection apparatus (12) according to Claim 11.

13. Method for operating a detection apparatus (12) for monitoring at least one monitoring region (13) for objects (14),
in which at least one electromagnetic scanning signal (28) is emitted into the at least one monitoring region (13) using at least one emitting device (18), electromagnetic echo signals (34) from electromagnetic scanning signals (28) reflected in the at least one monitoring region (13) are converted into electrical signals using at least one signal converting means (PD₁, PD₂, PD₃, PD₄, PD₅, PD₆, PD₇, PD₈, PD₉) of a receiving device (20),
signals (34) are subjected to a frequency analysis using at least one frequency analysing means (36) of the at least one receiving device (20),
electromagnetic signals (34) are analysed in at least one spectrum (44) using at least one spectral analysing means (38),
the at least one spectrum (44) is output in at least one spectrum output region (42) of the at least one spectral analysing means (38),
different ranges of the at least one electromagnetic spectrum (44) are converted using respective assigned signal converting means (PD₁, PD₂, PD₃, PD₄, PD₅, PD₆, PD₇, PD₈, PD₉) to form separate electrical signals,
wherein the electronic scanning signal (28), and thus also the electromagnetic echo signal (34), is a frequency-modulated electromagnetic continuous signal, and
**characterized in that**
a frequency difference between the scanning signal (28) and the echo signal (34) is determined from the position of the signal converting means (PD₁, PD₂, PD₃, PD₄, PD₅, PD₆, PD₇, PD₈, PD₉), in the range of which at a defined point in time corresponding spectral lines of the scanning signal (28) and of the echo signal (34) are located.

14. Method according to Claim 13, **characterized in that** an electromagnetic scanning signal (28u) and the corresponding electromagnetic echo signal (34) are coupled into at least one spectral analysing means (38) and analysed in at least one electromagnetic spectrum (44).

## Revendications

1. Dispositif de réception (20) d'un arrangement de détection (12) destiné à surveiller au moins une zone de surveillance (13) en vue de la présence d'objets (14) au moyen de signaux de balayage électromagnétiques (28), comprenant un moyen de conversion de signal (PD₁, PD₂, PD₃, PD₄, PD₅, PD₆, PD₇, PD₈, PD₉) destiné à convertir des signaux électromagnétiques (28u, 34), lesquels proviennent de signaux de balayage électromagnétiques (28), en signaux électriques,
et comprenant au moins un moyen d'analyse de fréquence (36) destiné à l'analyse de fréquence de signaux,
au moins un moyen d'analyse de fréquence (36) possédant au moins un moyen d'analyse spectrale (38) avec lequel des signaux électromagnétiques (28u, 34) peuvent être analysés en au moins un spectre électromagnétique (44), lequel peut être émis dans au moins une plage d'émission de spectre (42) de l'au moins un moyen d'analyse spectrale (38),
au moins deux moyens de conversion de signal (PD₁, PD₂, PD₃, PD₄, PD₅, PD₆, PD₇, PD₈, PD₉), avec lesquels des signaux électriques séparés peuvent être déterminés, étant associés à différentes portions (SA₁, SA₂, SA₃, SA₄, SA₅, SA₆, SA₇, SA₈, SA₉) d'au moins une plage d'émission de spectre (42) de l'au moins un moyen d'analyse spectrale (38),
les différentes portions (SA₁, SA₂, SA₃, SA₄, SA₅, SA₆, SA₇, SA₈, SA₉) d'au moins une plage d'émission de spectre (42) de l'au moins un moyen d'analyse spectrale (38) correspondent à des plages de fréquences différentes d'au moins un spectre électromagnétique (44),
le signal de balayage électromagnétique (28) et donc également le signal d'écho électromagnétique (34) étant un signal continu électromagnétique modulé en fréquence et
**caractérisé en ce que**
une différence de fréquence entre le signal de balayage (28) et le signal d'écho (34) provenant de la position du moyen de conversion de signal (PD₁, PD₂, PD₃, PD₄, PD₅, PD₆, PD₇, PD₈, PD₉), dans la plage desquels se trouvent, à un moment défini, des lignes spectrales correspondantes du signal de balayage (28) et du signal d'écho (34), est déterminée.

2. Dispositif de réception selon la revendication 1, **caractérisé en ce qu'**au moins un moyen d'analyse spectrale (38) possède au moins un appareil spectral.

3. Dispositif de réception selon la revendication 1 ou 2, **caractérisé en ce qu'**au moins un moyen de conversion de signal (PD₁, PD₂, PD₃, PD₄, PD₅, PD₆, PD₇, PD₈, PD₉) possède au moins un composant électro-optique avec lequel des signaux électromagnétiques (28u, 34) peuvent être convertis en signaux électriques.

4. Dispositif de réception selon l'une des revendications précédentes, **caractérisé en ce qu'**au moins un moyen d'analyse de fréquence (36) possède au moins un moyen de commande d'enregistrement (46) avec lequel un moment de début d'enregistrement (T) respectif et/ou une durée d'enregistrement respective pour au moins une partie des moyens de conversion de signal (PD₁, PD₂, PD₃, PD₄, PD₅, PD₆, PD₇, PD₈, PD₉) peut être commandé.

5. Dispositif de réception selon l'une des revendications précédentes, **caractérisé en ce que** le dispositif de réception (20) possède au moins un moyen de mémoire (C₁, C₂, C₃, C₄, C₅, C₆, C₇, C₈, C₉) destiné à mémoriser au moins une partie des signaux électriques déterminés avec les moyens de conversion de signal (PD₁, PD₂, PD₃, PD₄, PD₅, PD₆, PD₇, PD₈, PD₉).

6. Dispositif de réception selon l'une des revendications précédentes, **caractérisé en ce que** le dispositif de réception (20) possède au moins un moyen d'amplification (V₁, V₂, V₃, V₄, V₅, V₆, V₇, V₈, V₉) destiné à amplifier au moins une partie des signaux électriques déterminés avec les moyens de conversion de signal (PD₁, PD₂, PD₃, PD₄, PD₅, PD₆, PD₇, PD₈, PD₉).

7. Dispositif de réception selon l'une des revendications précédentes, **caractérisé en ce que** le dispositif de réception (20) possède au moins un moyen de numérisation (48) destiné à numériser au moins une partie des signaux électriques déterminés avec les moyens de conversion de signal (PD₁, PD₂, PD₃, PD₄, PD₅, PD₆, PD₇, PD₈, PD₉).

8. Dispositif de réception selon l'une des revendications précédentes, **caractérisé en ce qu'**au moins un moyen d'analyse de fréquence (36) possède au moins une zone d'injection de signaux (40) destinée à l'injection de signaux électromagnétiques (28u, 34).

9. Dispositif de réception selon l'une des revendications précédentes, **caractérisé en ce que** le dispositif de réception (20) possède au moins un moyen de détermination de grandeur de réception (50) destiné à déterminer au moins une grandeur de réception (54) pour au moins un objet (14) détecté directement ou indirectement à partir de signaux électriques qui peuvent être déterminés avec les moyens de conversion de signal (PD₁, PD₂, PD₃, PD₄, PD₅, PD₆, PD₇, PD₈, PD₉).

10. Dispositif de réception selon l'une des revendications précédentes, **caractérisé en ce que** le dispositif de réception (20) possède au moins un moyen de détermination d'intensité (52) destiné à déterminer une grandeur d'intensité, laquelle caractérise une intensité d'au moins un signal électromagnétique (28u, 34) introduit dans le dispositif de réception (20).

11. Arrangement de détection (12) destiné à surveiller au moins une zone de surveillance (13) en vue de la présence d'objets (14) au moyen de signaux de balayage électromagnétiques (28),
comprenant au moins un dispositif d'émission (18) destiné à émettre des signaux de balayage électromagnétiques (28) dans au moins une zone de surveillance (13),
comprenant au moins un dispositif de réception (20) selon la revendication 1.

12. Véhicule (10) comprenant au moins un arrangement de détection (12) selon la revendication 11.

13. Procédé pour faire fonctionner un arrangement de détection (12) destiné à surveiller au moins une zone de surveillance (13) en vue de la présence d'objets (14), avec lequel au moins un signal de balayage électromagnétique (28) est émis dans au moins une zone de surveillance (13) à l'aide d'au moins un dispositif d'émission (18),
des signaux électromagnétiques (34) provenant de signaux de balayage électromagnétiques (28) réfléchis dans au moins une zone de surveillance (13) sont convertis en signaux électriques avec au moins un moyen de conversion de signal (PD₁, PD₂, PD₃, PD₄, PD₅, PD₆, PD₇, PD₈, PD₉) d'un dispositif de réception (20),
les signaux (34) sont soumis à une analyse de fréquence avec au moins un moyen d'analyse de fréquence (36) de l'au moins un dispositif de réception (20),
les signaux électromagnétiques (34) dans en au moins un spectre (44) sont analysés avec au moins un moyen d'analyse spectrale (38),
l'au moins un spectre **(44)** est émis dans au moins une plage d'émission de spectre (42) de l'au moins un moyen d'analyse spectrale (38),
les différentes plages de l'au moins un spectre électromagnétique (44) sont converties en signaux électriques séparés avec des moyens de conversion de signal (PD₁, PD₂, PD₃, PD₄, PD₅, PD₆, PD₇, PD₈, PD₉) respectivement associés,
le signal de balayage électronique (28) et donc également le signal d'écho électromagnétique (34) étant un signal continu électromagnétique modulé en fréquence et **caractérisé en ce que**
une différence de fréquence entre le signal de balayage (28) et le signal d'écho (34) provenant de la position du moyen de conversion de signal (PD₁, PD₂, PD₃, PD₄, PD₅, PD₆, PD₇, PD₈, PD₉), dans la plage desquels se trouvent, à un moment défini, des lignes spectrales correspondantes du signal de balayage (28) et du signal d'écho (34), est déterminée.

14. Procédé selon la revendication 13, **caractérisé en ce qu'**un signal de balayage électromagnétique (28u) et le signal d'écho électromagnétique (34) correspondant sont injectés dans au moins un moyen d'analyse spectrale (38) et analysés en au moins un spectre électromagnétique (44).
